# EUROPÄISCHE PATENTSCHRIFT

(11) **EP 2 418 145 B1**
(45) Veröffentlichungstag und Bekanntmachung des Hinweises auf die Patenterteilung: **08.10.2014**
(21) Anmeldenummer: 11177077.2
(22) Anmeldetag: 10.08.2011
(51) Int. Cl.: B64C 1/14, B64D 9/00, B64C 1/20

(54) **Frachtraumboden sowie Flugzeug mit einem Frachtraumboden**
Freight deck floor and aircraft with same
Plancher de soute ainsi qu'avion doté d'un tel plancher

(30) Priorität: 13.08.2010 DE 102010036982
(43) Veröffentlichungstag der Anmeldung: 15.02.2012
(73) Patentinhaber: Telair International GmbH, 83714 Miesbach (DE)
(72) Erfinder: Holzner, Richard, 83071 Stephanskirchen (DE); Huber, Thomas, 83727 Schliersee (DE)
(74) Vertreter: Bohnenberger, Johannes

(56) Entgegenhaltungen:
- WO-A1-2005/012085
- DE-B3-102004 016 219
- US-A1- 2003 057 326

## Beschreibung

Die Erfindung betrifft einen Frachtraumboden gemäß Patentanspruch 1 und ein Flugzeug mit einem Frachtraumboden gemäß Patentanspruch 15.

Ein Großteil der Fracht wird heutzutage nicht mehr per Schiff, sondern per Flugzeug transportiert. Die Fracht wird in Frachtbehältern, z.B. Containern, transportiert, um das Be- bzw. Entladen zu beschleunigen. Diese müssen während des Fluges befestigt sein, damit sie sich bei Beschleunigungen nicht bewegen und hierdurch eventuell der Inhalt der Frachtbehälter und/oder das Flugzeug beschädigt wird.

Solche Frachtraumboden sind bereits in WO005/012085, DE102004016219 oder US2003/0057326 offenbart.

Der Frachtraumboden umfasst zur Befestigung und zur Führung der Fracht im Frachtraum üblicher Weise eine Vielzahl von Riegelelementen. Es werden z.B. Längsriegelelemente verwendet, um den Container in Längsrichtung des Flugzeugs (x-Richtung) zu befestigen. Die bekannten Frachtraumböden bzw. die Anordnung der daran angebrachten Riegelelemente sind hinsichtlich einer Symmetrieebene, die die Längsachse des Flugzeugs umfasst und senkrecht auf dem Frachtraumboden steht, spiegelsymmetrisch. Die Symmetrieebene teilt den Frachtraum hinsichtlich seiner geometrischen Ausdehnung in zwei im Wesentlichen symmetrische Hälften. Allgemein gilt, dass mit zunehmender Anzahl von transportierbaren Frachtbehältern und von möglichen Ladekonfigurationen die Anzahl der nötigen Riegelelemente dramatisch zunimmt. Eine Ladekonfiguration kann als eine bestimmte Anordnung der Frachtbehälter auf dem Frachtraumboden definiert werden.

Die große Anzahl an möglichen Ladekonfigurationen, insbesondere bei verschieden großen Containern, führt zu einer großen Anzahl an Riegelelementen, die benötigt werden. Durch die große Anzahl an Riegelelementen wird der Frachtraumboden sehr schwer, was sich nachteilig auf den Kerosinverbrauch und somit auf die Betriebskosten auswirkt. Nachteilig an bisher bekannten Frachtraumböden ist, dass sie sich nicht schnell umkonfigurieren lassen. Da die Abmessungen der Frachtraumböden im Flugzeug begrenzt sind, ist die Anzahl der am Frachtraumboden befestigbaren Riegelelemente und somit die Anzahl der möglichen Ladekonfigurationen limitiert. Durch ein Verkleinern der Größe der Riegelelemente lässt sich die mögliche Anzahl an Riegelelementen in einem Frachtraumboden erhöhen, was sich jedoch sehr negativ auf die Robustheit und Tragfähigkeit der Riegelelemente auswirkt.

Der Erfindung liegt die Aufgabe zu Grunde, einen zum Transport von Frachtbehältern besser geeigneten Frachtraumboden aufzuzeigen.

Insbesondere liegt der Erfindung die Aufgabe zu Grunde, einen Frachtrumboden aufzuzeigen, der eine Vielzahl möglicher Ladekonfigurationen anbietet.

Diese Aufgabe wird durch einen Frachtraumboden nach Anspruch 1 und ein Flugzeug mit einem Frachtraumboden nach Anspruch 15 gelöst.

Insbesondere wird die Aufgabe durch einen Frachtraumboden eines oberen und/oder eines unteren Decks eines Flugzeugs mit einer Symmetrieebene, die den Frachtraumboden in eine erste Hälfte und eine zweite Hälfte teilt, gelöst, der Riegelspalten umfasst, die jeweils alle auf einer Höhe in Längsrichtung (x-Richtung) des Flugzeugs befindlichen Riegelelemente, insbesondere Längsriegelemente, zum Sichern von genormten Frachtbehältern, insbesondere von Paletten und/oder Containern, in Längsrichtung (x-Richtung) umfassen, wobei alle Längsriegelelemente mindestens einer Riegelspalte in nur einer der Hälften angeordnet sind.

Ein wesentlicher Punkt der Erfindung besteht darin, dass mindestens eine Riegelspalte Längsriegelelemente nur in einer Hälfte des Frachtraumbodens aufweist. Hierdurch ist die Anordnung der Riegelelemente im Frachtraumboden bezüglich einer Symmetrieebene, die die Längsachse des Flugzeuges umfasst und senkrecht auf dem Frachtraumboden steht, nicht symmetrisch bzw. asymmetrisch. Die Riegelelemente zum Sichern der Frachtbehälter sind zumindest teilweise asymmetrisch bezüglich der Symmetrieebene angeordnet. Hierdurch wird gegenüber den herkömmlichen Frachtböden eine geringere Anzahl von Riegelelementen bei einer hohen Anzahl an möglichen Ladekonfigurationen für die Frachtbehälter benötigt. Somit sinkt das Gewicht des Frachtraumbodens. Des Weiteren nehmen hierdurch auch der Wartungsaufwand und die Ausfallwahrscheinlichkeit ab. Durch die Asymmetrie der Anordnung der Riegelelemente wird das Anbringen der Riegelelemente am/im Frachtraumboden deutlich erleichtert, da gegenüber einer symmetrischen Anordnung der Riegelelemente hierfür mehr Platz zur Verfügung steht. Hierdurch kann auch der Frachtraumboden mit den Riegelelementen viel schneller in das Flugzeug ein- bzw. ausgebaut werden.

Eine Ladekonfiguration kann als eine Anordnung der Frachtbehälter auf dem Frachtraumboden definiert werden. Bei einer symmetrischen Ladekonfiguration sind die Frachtbehälter symmetrisch in Bezug auf die Symmetrieebene angeordnet. Bei einer asymmetrischen Ladekonfiguration sind die Frachtbehälter asymmetrisch in Bezug auf die Symmetrieebene angeordnet. Bei einer asymmetrischen Ladekonfiguration gibt es zwei mögliche, unterschiedliche Ladekonfigurationen, die durch Spiegelung an der Symmetrieebene ineinander übergehen. Eine der beiden möglichen Anordnungen der Riegelspalten für diese asymmetrischen Ladekonfigurationen wurde erfindungsgemäß ausgewählt, um die nötige Anzahl von Riegelelementen zu optimieren.

Eine Riegelspalte kann derart definiert werden, dass eine Riegelspalte alle Längsriegelelemente umfasst, die sich auf einer Höhe in Längsrichtung (x-Richtung) des Flugzeugs befinden.

Die Symmetrieebene kann als die Ebene definiert werden, die das jeweilige Deck des Flugzeugs hinsichtlich seiner geometrischen Ausdehnung in zwei im Wesentlichen symmetrische Hälften teilt. Die Symmetrieebene umfasst die Längsachse des Flugzeugs und steht senkrecht auf dem Frachtraumboden.

In einer Ausführungsform sind Riegelklauen der Längsriegelelemente einer Riegelspalte derart angeordnet, dass die Riegelklauen eine Anschlaglinie für eine Seite eines Frachtbehälters bilden. Hierdurch werden die bei einer Beschleunigung auftretenden Kräfte eines Frachtbehälters auf mehrere Riegelklauen aufgeteilt. Somit müssen die einzelnen Riegelklauen weniger hohen Kräften standhalten.

Eine Anschlaglinie kann derart definiert werden, dass eine Anschlaglinie die Anschlagflächen von Riegelklauen umfasst, die auf gleicher Höhe in Längsrichtung (x-Richtung) des Flugzeugs einen Frachtbehälter auf einer Seite des Frachtbehälters sichern (z.B. liegen die Anschlagflächen in einer Ebene).

Eine Riegelspalte kann genauer derart definiert werden, dass die Riegelspalte alle Längsriegelelemente umfasst, die sich auf einer Höhe in Längsrichtung (x-Richtung) des Flugzeugs befinden, wobei mindestens eine Anschlagfläche jedes Längsriegels aus der Riegelspalte in einer der Riegelspalte zugeordneten Anschlagebene liegt.

Mindestens eine Riegelspalte kann mindestens zwei, insbesondere mindestens vier, Längsriegelelemente in einer Hälfte umfassen. Hierdurch wird sichergestellt, dass der Frachtbehälter auf einer Seite durch mindestens zwei bzw. mindestens vier Längsriegelelemente gesichert wird, wodurch die einzelnen Längsriegelelemente geringeren Kräften standhalten müssen.

In einer weiteren Ausführungsform umfasst der Frachtraumboden sowohl symmetrische Riegelspalten, die Längsriegelelemente in beiden Hälften aufweisen, als auch asymmetrische Riegelspalten, die Längsriegelelemente in nur einer Hälfte aufweisen. Hierdurch wird sichergestellt, dass auch symmetrische Ladekonfigurationen des Frachtraums möglich sind. Der erfindungsgemäße Frachtraumboden umfasst asymmetrische Riegelspalten, um die nötige Anzahl der Längsriegelelemente zu minimieren.

Die Abstände mindestens einer Riegelspalte zu ihren zwei unmittelbar benachbarten Riegelspalten können unterschiedlich groß sein. Hierdurch wird die Anzahl möglicher Ladekonfigurationen für die Frachtbehälter weiter erhöht. Zwei unmittelbar benachbarte Riegelspalten können als zwei Riegelspalten definiert werden, zwischen denen keine weiteren Riegelspalten angeordnet sind.

In einer weiteren Ausführungsform sind die Riegelspalten an solchen Positionen in Längsrichtung (x-Richtung) des Flugzeugs angeordnet, an denen auf gleicher Höhe in Längsrichtung (x-Richtung) des Flugzeugs keine korrespondierenden Querriegelelemente zum Sichern der Frachtbehälter in Querrichtung (y-Richtung) des Flugzeugs angeordnet sind. Auf diese Weise wird das Anbringen bzw. Entfernen der Riegelspalten bzw. Längsriegelelemente und der Querriegelelemente weiter erleichtert, da sich die Längsriegelelemente und die Querriegelelemente weniger stark behindern.

In einer weiteren Ausführungsform sind die Riegelspalten zur Aufnahme von standardisierten Frachtbehältern angeordnet, die insbesondere Standardlängen und/oder Standardbreiten von ca. 62 inch (157,48 cm), ca. 88 inch (223,52 cm), ca. 96 inch (243,84 cm), ca. 125 inch (317,50 cm), ca. 238,5 inch (605,79 cm) und/oder ca. 319 inch (810,26 cm) haben. Vorteilhaft hieran ist, dass eine große Zahl unterschiedlicher, standardisierter Frachtbehälter an dem Frachtraumboden befestigt werden können. Hierdurch wird eine Vielzahl von möglichen Ladekonfigurationen für Frachtbehälter mit Standardmaßen ermöglicht, um den Frachtraum möglichst effizient auszunutzen. Zudem können Frachtbehälter mit Standardmaßen sowohl längs als auch quer durch die Riegelspalten am Frachtraumboden befestigt werden.

Der Abstand mindestens eines Paars asymmetrischer Riegelspalten kann in Längsrichtung (x-Richtung) des Flugzeugs einer Standardlänge und/oder Standardbreite von Frachtbehältern entsprechen. Hierdurch wird sichergestellt, dass eine asymmetrische Ladekonfiguration mit Frachtbehältern, die eine Standardlänge und/oder eine Standardbreite aufweisen, möglich ist. Bei einer asymmetrischen Ladekonfiguration sind die Frachtbehälter asymmetrisch in Bezug auf die Symmetrieebene angeordnet.

Der Frachtraumboden kann Verankerungsschienen, insbesondere zwei pro Hälfte, vorzugsweise vier pro Hälfte, in Längsrichtung (x-Richtung) des Flugzeugs zur Aufnahme der Längsriegelelemente umfassen, wobei die Verankerungsschienen vorzugsweise teil von Rollenbahnen sind. Auf diese Weise wird der Einbau der Längsriegelelemente erheblich vereinfacht, da sie in bestehenden Verankerungsschienen befestigt werden können. Zudem wird die Ausrichtung der Riegelspalten zueinander vereinfacht. Darüber hinaus können in den Verankerungsschienen auf einfache Art und Weise weitere Vorrichtungen angeordnet werden, die gegenüber den Längsriegelelementen ohne weiteres Zutun ausgerichtet sind. Ein weiterer Vorteil hiervon ist, dass die Verankerungsschienen eine solide Befestigung für die Längsriegelelemente bzw. eine gute Ableitung der auf die Längsriegelelemente wirkenden Kräfte bieten.

Eine Riegelspalte kann anmeldungsgemäß derart definiert werden, dass eine Riegelspalte nur die Längsriegelelemente umfasst, die auf gleicher Höhe in Längsrichtung (x-Richtung) des Flugzeugs in den Verankerungsschienen angeordnet sind.

Die Abstände der Verankerungsschienen zueinander können in den jeweiligen Hälften zumindest abschnittsweise gleich groß sein. Durch die regelmäßige Anordnung der Verankerungsschienen in den beiden Hälften wird die Anzahl der Ladekonfigurationen, die möglich sind, weiter erhöht. Darüber hinaus werden die auftretenden Kräfte innerhalb der Hälften gleichmäßig auf die Längsriegelelemente verteilt. Hierdurch erhöht sich auch die Sicherheit der Befestigung der Frachtbehälter.

In einer weiteren Ausführungsform weist mindestens eine Riegelspalte Riegelelemente mit zwei in im Wesentlichen entgegengesetzten Richtungen entlang der Längsrichtung (x-Richtung) des Flugzeugs gerichteten Riegelklauen auf. Auf diese Weise kann die Anzahl der Riegelelemente weiter verringert werden, da jedes Riegelelement mit zwei Riegelklauen zwei verschiedene Frachtbehälter sichern kann.

In einer weiteren Ausführungsform sind am äußeren Rand des Frachtraumbodens Querriegelelemente als Seitenführungselemente angeordnet, die an verschiedenen Positionen entlang der Querrichtung (y-Richtung) des Flugzeugs festsetzbar sind. Hierdurch wird die Anzahl der möglichen Ladekonfigurationen für die Frachtbehälter weiter erhöht.

Korrespondierende Seitenführungselemente können derart anordenbar sein, dass der Abstand zwischen den Seitenführungselementen mindestens 5 m, insbesondere 5,4 m, oder mehr beträgt. Vorteilhaft hieran ist, dass auch Frachtbehälter mit einer sehr großen Ausdehnung in Querrichtung (y-Richtung) des Flugzeugs von den Seitenführungselementen geführt und/oder befestigt werden können.

Die Seitenführungselemente umfassen beispielsweise einen sich in Querrichtung (y-Richtung) des Flugzeugs erstreckenden Befestigungsrahmen, mindestens eine Seitenführungsvorrichtung mit einem Schlitten, wobei die Seitenführungsvorrichtung in Querrichtung (y-Richtung) des Flugzeugs verschiebbar in dem Befestigungsrahmen gelagert ist, wobei der Schlitten mindestens eine Führungsrolle zum Abstützen der Frachtbehälter aufweist. Vorzugsweise lässt sich die Seitenführungsvorrichtung anhand eines Schlittens der bewegbar in dem Befestigungsrahmen gelagert ist, verschieben. Festsetzelemente der Seitenführungselemente können beispielsweise Rastelemente und Gegenrastelemente an definierten Positionen im Befestigungsrahmen aufweisen und/oder Achsstummel umfassen, die zum Lösen der Festsetzvorrichtung, insbesondere entgegen einer Federkraft, vorzugsweise am oder im Schlitten, verschiebbar gelagert sind. Die Seitenführungsvorrichtung kann mindestens eine Riegelklaue zum zumindest abschnittsweisen Umgreifen der Frachtbehälter umfassen.

In einer weiteren Ausführungsform sind nahe zur Symmetrieebene Querriegelelemente, insbesondere mit mindestens zwei Riegelklauen, als Zentralführungselemente angeordnet, die an verschiedenen Positionen entlang der Querrichtung (y-Richtung) des Flugzeugs festsetzbar sind. Ein Vorteil hiervon ist, dass Frachtbehälter, die sich nicht über die komplette Breite des Decks erstrecken, auf einfache Art und Weise am Frachtraumboden befestigt werden können. Zudem kann der Frachtraumboden auf Frachtbehälter mit unterschiedlichen Ausdehnungen in Querrichtung (y-Richtung) des Flugzeugs eingestellt werden. Hierdurch erhöht sich die Anzahl möglicher Ladekonfigurationen.

In einer weiteren Ausführungsform sind Riegelklauen der Querriegelelemente zumindest teilweise unabhängig voneinander verschiebbar und/oder in eine abgesenkte Position umklappbar. Vorteilhaft hieran ist, dass der Frachtraumboden auf einfache und schnelle Art und Weise auf Frachtbehälter mit unterschiedlichen Dimensionen in Querrichtung (y-Richtung) des Flugzeugs angepasst werden können. Durch die Umklappbarkeit der Querriegelelemente in eine abgesenkte Position, in der sie von den Frachtbehältern überfahrbar sind, müssen die Querriegelelemente, wenn sie nicht benötigt werden, nicht ausgebaut werden, sondern können im Frachtraumboden verbleiben. Ein weiterer Vorteil hiervon ist, dass die Anzahl möglicher symmetrischer und asymmetrischer Ladekonfigurationen weiter erhöht wird.

Die erfindungsgemäße Aufgabe wird auch durch ein Flugzeug mit einem besagten Frachtraumboden gelöst.

Bevorzugte Ausführungsformen ergeben sich aus den Unteransprüchen. Nachfolgend wird die Erfindung anhand von Zeichnungen von Ausführungsbeispielen näher erläutert. Hierbei zeigen
- Fig. 1: eine Aufsicht auf einen Teil eines erfindungsgemäßen Frachtraumbodens;
- Fig. 2: eine Aufsicht auf einen erfindungsgemäßen Frachtraumboden mit geladenen Frachtbehältern;
- Fig. 3: eine Aufsicht auf einen erfindungsgemäßen Frachtraumboden mit geladenen Frachtbehältern;
- Fig. 4-10: jeweils Aufsichten auf einen erfindungsgemäßen Frachtraumboden mit unterschiedlichen Ladekonfigurationen von Frachtbehältern; und
- Fig. 11: eine Aufsicht auf einen Teil eines weiteren erfindungsgemäßen Frachtraumbodens.

Bei der nachfolgenden Beschreibung werden für gleiche und gleich wirkende Teile dieselben Bezugsziffern verwendet.

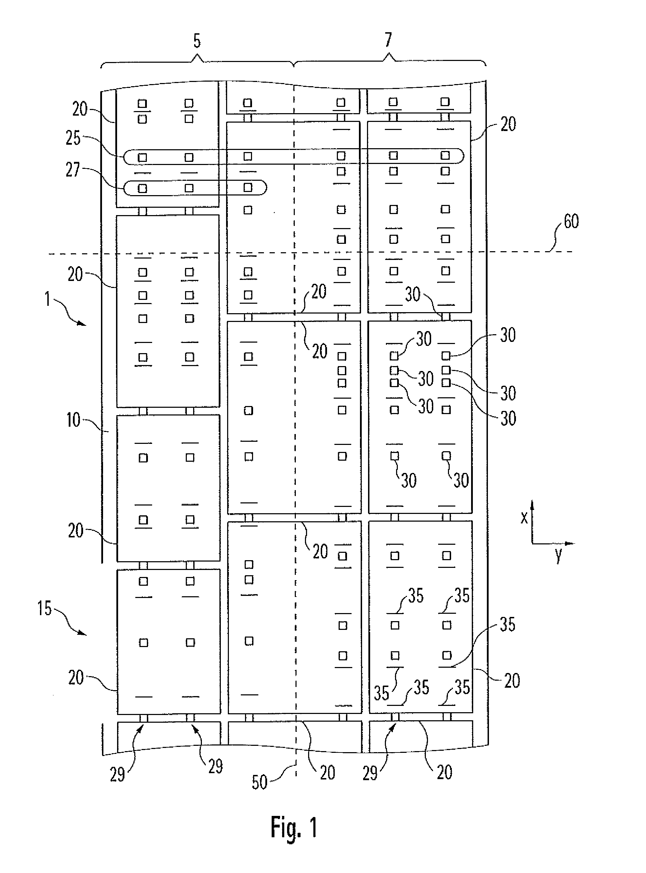

Fig. 1 zeigt eine Aufsicht auf einen Teil eines erfindungsgemäßen Frachtraumbodens 10 eines Flugzeugs 1. In der Mitte des Frachtraumbodens 10 verläuft die Symmetrieebene 50. Die Symmetrieebene 50 teilt das Deck des Flugzeugs 1 in eine erste Hälfte 5 und eine zweite Hälfte 7. Das Deck kann das üblicherweise als Frachtraumdeck bezeichnete untere Deck und/oder das üblicherweise als Passagierdeck bezeichnet obere Deck des Flugzeugs 1 sein. Das jeweilige Deck des Flugzeugs 1 ist hinsichtlich seiner geometrischen Ausdehnung im Wesentlichen symmetrisch gegenüber der Symmetrieebene 50. Die Symmetrieebene 50 umfasst die Längsachse des Flugzeugs 1 und steht senkrecht auf dem Frachtraumboden 10. Die Symmetrieebene 50 teilt den Frachtraumboden 10 bzw. den Frachtraum hinsichtlich seiner geometrischen Ausdehnung in zwei im Wesentlichen symmetrische Hälften 5, 7. Die Längsachse und Längsrichtung (x-Richtung) des Flugzeugs 1 sind im Wesentlichen durch die Verbindungslinie zwischen Bug und Heck des Flugzeugs 1 definiert.

Der Frachtraumboden 10 umfasst eine Vielzahl von Riegelspalten 25, 27, die jeweils alle im Wesentlichen auf einer Höhe in Längsrichtung (x-Richtung) des Flugzeugs 1 befindlichen Riegelelemente 30, insbesondere Längsriegelelemente 30, zum Sichern von genormten Frachtbehältern 20 in Längsrichtung (x-Richtung) des Flugzeugs 1 umfassen. Die Frachtbehälter 20 können insbesondere Paletten und/oder Container oder dergleichen sein. Die in Fig. 1 gezeigten Riegelelemente 30 sind Längsriegelelemente, die die Frachtbehälter 20 im Wesentlichen in Längsrichtung (x-Richtung) des Flugzeugs 1 sichern.

Der Frachtraumboden 10 umfasst darüber hinaus Querriegelelemente (in Fig. 1 nicht gezeigt). Die Querriegelelemente 40, 45, 47 können zum Führen von Frachtbehältern 20 in Längsrichtung (x-Richtung) des Flugzeugs 1 und/oder zur Sicherung der Frachtbehälter 20 im Wesentlichen in Querrichtung (y-Richtung) des Flugzeugs 1 ausgebildet sein. Die Querriegelelemente können, wenn sie zur Sicherung der Frachtbehälter 20 ausgebildet sind, die Frachtbehälter 20 auch begrenzt in Längsrichtung (x-Richtung) des Flugzeugs 1 sichern. Das Gleiche gilt für die Längsriegelelemente 30. Die Hauptsicherungsfunktion von Längsriegelelementen 30 ist jedoch die Sicherung von Frachtbehältern 20 in Längsrichtung (x-Richtung) des Flugzeugs 1. Bei Längsriegelelementen 30 zeigt die jeweilige Riegelklaue bzw. zeigen die jeweiligen Riegelklauen in bzw. in und gegen die Längsrichtung (x-Richtung) des Flugzeugs 1.

Die Riegelspalten 25, 27 sind symmetrische Riegelspalten 25, die Längsriegelelemente 30 in beiden Hälften 5, 7 umfassen, als auch asymmetrische Riegelspalten 27, die nur Längsriegelelemente 30 in einer Hälfte 5, 7 umfassen.

Die Abstände (y-Richtung) der Längsriegelelemente 30 einer Riegelspalte 25, 27 zueinander sind in den jeweiligen Hälften 5, 7 im Wesentlichen gleich groß. Vorstellbar ist jedoch auch, dass die Abstände unterschiedlich groß sind. Die symmetrischen bzw. asymmetrischen Riegelspalten 25, 27 umfassen in Fig. 1 jeweils sechs bzw. drei Längsriegelelemente 30. Eine kleinere oder eine größere Anzahl von Längsriegelelementen 30 pro Riegelspalte 25, 27 ist vorstellbar.

Die Anordnung der Längsriegelelemente 30 im Frachtraumboden 10 ist asymmetrisch bezüglich der Symmetrieebene 50 des Decks. Hierdurch wird eine geringere Anzahl von Längsriegelelementen 30 als bei einer symmetrischen Anordnung der Längsriegelelemente 30 benötigt. Durch die geringere Anzahl von Längsriegelelementen 30 bei einem asymmetrischen Frachtraumboden 10 wird Platz gespart, wodurch die Anordnung von Längsriegelelementen 30 zur Sicherung von Frachtbehältern 20 in Längsrichtung (x-Richtung) des Flugzeugs 1 als auch von Querriegelelementen 40, 45, 47 erheblich erleichtert wird. Auch die Anordnung anderer bzw. weiterer Funktionselemente wird hierdurch erleichtert.

Die Anordnung der Längsriegelelemente 30 in Fig. 1 ist nicht nur asymmetrisch bezüglich der Symmetrieebene 50, sondern auch asymmetrisch bezüglich der Rumpfmittellinie 60, die senkrecht zur Symmetrieebene 50 und parallel zum Frachtraumboden 10 verläuft. Die Asymmetrie bezüglich der Rumpfmittellinie 60 ist eine mögliche Ausgestaltung. Die Asymmetrie der Anordnung der Längsriegelelemente 30 bezüglich der Symmetrieebene 50 ist zumindest im Hauptbereich des Flugzeugs 1, in dem der Flugzeugrumpf seine maximale Breite hat, vorhanden und erfindungswesentlich.

Durch die unterschiedlichen Abstände zwischen den Riegelspalten 25, 27 in Längsrichtung (x-Richtung) des Flugzeugs 1 wird es erreicht, dass eine Vielzahl unterschiedlicher Frachtbehälter 20 mit unterschiedlichen Ausdehnungen bzw. Standardlängen und/oder Standardbreiten an dem Frachtraumboden 10 befestigt werden können.

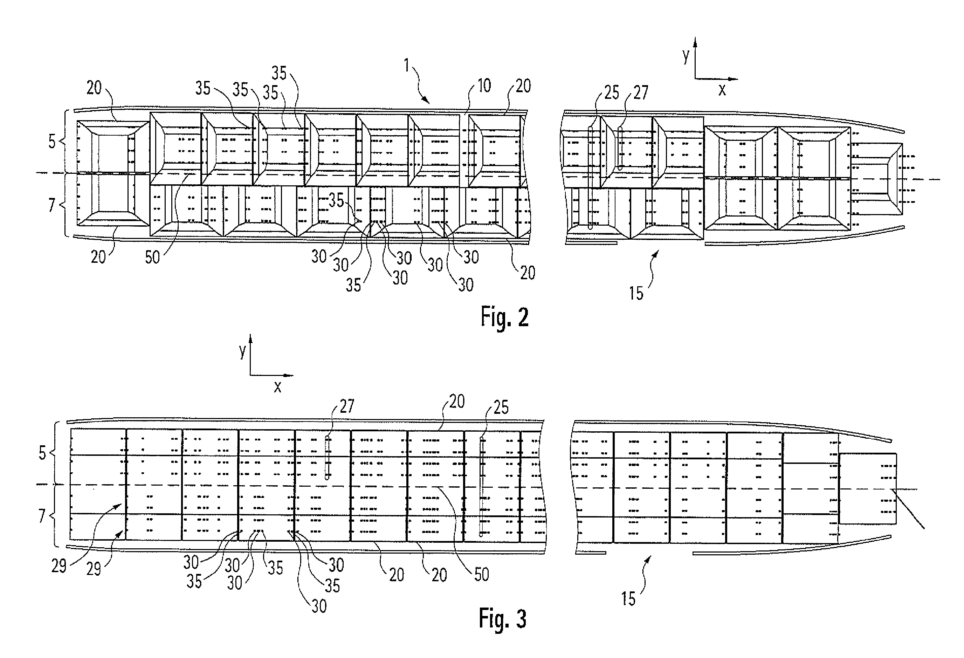

In Fig. 1 sind Container 20 mit unterschiedlichen Maßen in einer Ladekonfiguration gezeigt. Eine Ladekonfiguration kann als eine Anordnung der Frachtbehälter 20 auf dem Frachtraumboden 10 definiert werden. Bei einer symmetrischen Ladekonfiguration sind die Frachtbehälter 20 symmetrisch in Bezug auf die Symmetrieebene 50 (z.B. Fig. 3) angeordnet. Bei einer asymmetrischen Ladekonfiguration sind die Frachtbehälter 20 asymmetrisch in Bezug auf die Symmetrieebene 50 angeordnet (z.B. Fig. 2). Die Ladekonfiguration bzw. Anordnung der Frachtbehälter 20 ist in Fig. 1 ebenfalls asymmetrisch bezüglich der Symmetrieebene 50. Bei der in Fig. 1 gezeigten Ladekonfiguration und bei den meisten anderen Ladekonfigurationen werden nicht alle Riegelspalten 25, 27 bzw. Längsriegelelemente 30 benötigt. Ein großer Teil der Längsriegelelemente 30 befindet sich unterhalb der Frachtbehälter 20. Die Längsriegelelemente 30 sind daher aus einer Arbeitsposition, in der sie einen Frachtbehälter 20 sichern, in eine Ruheposition, in der sie von Frachtbehältern 20 überfahren werden können, abklappbar. So müssen die momentan nicht genutzten Längsriegelelemente 30 nicht aus- und danach wieder eingebaut werden.

Die Längsriegelelemente 30 umfassen jeweils zwei in entgegengesetzte Richtungen entlang der Längsrichtung (x-Richtung) des Flugzeugs 1 gerichtete Riegelklauen. Jedes Riegelelement 30 sichert daher die Längsseiten von zwei Frachtbehältern 20. Vorstellbar ist jedoch auch, dass insbesondere in den beiden Endbereichen des Flugzeugs 1, in dem die Breite des Rumpfes abnimmt, die Längsriegelelemente 30 nur jeweils eine Riegelklaue umfassen. Die Riegelklauen der Längsriegelelemente 30 einer Riegelspalte 25, 27 sind derart angeordnet sind, dass die Riegelklauen eine Anschlaglinie für jeweils eine Seite eines Frachtbehälters 20 bilden.

Die realisierten Abstände zwischen den verschiedenen Riegelspalten 25, 27 entsprechen insbesondere Standardlängen und/oder Standardbreiten von Frachtbehältern 20. Die realisierten Abstände umfassen nicht nur die Abstände zwischen unmittelbar in Längsrichtung (x-Richtung) des Flugzeugs 1 benachbarten Riegelspalten 25, 27, sondern beispielsweise auch die Abstände zwischen einer Riegelspalte 25, 27 und der übernächsten benachbarten Riegelspalte 25, 27 in Längsrichtung (x-Richtung) des Flugzeugs 1. Die Abstände können zwischen den Riegelklauen der entsprechenden Riegelspalten 30 gemessen werden, die die Anschlagslinien oder Anschlagebenen der Frachtbehälter 20 bilden.

Die Kombinationsmöglichkeiten der Abstände der Riegelspalte 25, 27 zueinander in Längsrichtung (x-Richtung) des Flugzeugs 1 umfassen insbesondere Abstände von 62 inch (157,48 cm), 88 inch (223,52 cm), 96 inch (234,84 cm), 125 inch (317,50 cm), 238,5 inch (605,79 cm) und/oder 319 inch (810,26 cm). Andere größere oder kleinere Abstände zwischen den Riegelspalten 25, 27 sind vorstellbar.

Zwischen den Frachtbehältern 20 bzw. Paletten kann in Längsrichtung (x-Richtung) des Flugzeugs 1 Platz frei gelassen werden, um Güter zu transportieren, die über den Frachtbehälter bzw. die Palette hinaus stehen. So können beispielsweise Paletten am Frachtraumboden 10 befestigt werden, die Frachtgüter bis zu einer Länge von 360 inch (914,40 cm) beinhalten.

Die Frachtbehälter 20 in Fig. 1 werden teilweise von symmetrischen Riegelspalten 25 und teilweise von asymmetrischen Riegelspalten 27 gesichert.

Der Abstand zwischen der Symmetrieebene 50 und den unmittelbar benachbarten Längsriegelelemente 30 zur Symmetrieebene 50 ist in beiden Hälften 5, 7 im Wesentlichen gleich groß. Vorstellbar ist jedoch auch, dass dieser Abstand in den beiden Hälften 5, 7 unterschiedlich groß ist.

In der zweiten Hälfte 7 ist eine größere Anzahl von Längsriegelelementen 30 angeordnet als in der ersten Hälfte 5. Es ist auch vorstellbar, dass in der ersten Hälfte 5 mehr Längsriegelelemente 30 angeordnet sind als in der zweiten Hälfte 7.

Die Längsriegelelemente 30 sind in den beiden Hälften 5, 7 in jeweils drei Reihen 29 angeordnet, die jeweils parallel zu der Symmetrieebene 50 verlaufen. Eine größere oder kleinere Anzahl von Reihen 29, die mit einer größeren oder kleineren Anzahl von Längsriegelelementen 30 pro Riegelspalte 25, 27 verbunden ist, ist vorstellbar.

Zwischen den Längsriegelelementen 30 der Riegelspalten 25, 27 sind teilweise Lastaufnahmeeinrichtungen 35 angeordnet, die entlang den Reihen 29 von Längsriegelelementen 30 ausgerichtet sind. Die Lastaufnahmeeinrichtungen 35 können insbesondere Rollen, Kugelrollen oder Nachlaufrollen sein. Hierdurch wird die Bewegung der Frachtbehälter 20 auf dem Frachtraumboden 10 erleichtert. Die Frachtbehälter 20 werden durch die Frachtraumtür 15 in den Frachtraum auf den Frachtraumboden 10 bewegt. Anschließend werden sie auf ihre Verriegelungsposition gefahren und mit den Längsriegelelementen 30 gesichert. Im Bereich der Frachtraumtür 15 können noch weitere Elemente, wie z.B. PDUs, im Frachtraumboden 10 angeordnet sein.

Fig. 2 zeigt eine Aufsicht auf einen weiteren erfindungsgemäßen Frachtraumboden 10 eines Flugzeugs. Die Anordnung der Riegelspalten 25, 27 bzw. Längsriegelelemente 30 der in Fig. 2 gezeigten Ausführungsform ist eine andere als der in Fig. 1 gezeigten Ausführungsform. Jede symmetrische Riegelspalte 25 umfasst in der in Fig. 2 gezeigten Ausführungsform acht Längsriegelelemente 30 und jede asymmetrische Riegelspalte 27 umfasst vier Längsriegelelemente 30. Die Längsriegelelemente 30 sind dementsprechend in jeweils vier Reihen 29 pro Hälfte 5, 7 im Wesentlichen parallel zur Symmetrieebene 50 angeordnet.

Zwischen den Riegelspalten 25, 27 sind in Längsrichtung (x-Richtung) des Flugzeugs 1 zumindest teilweise Lastaufnahmeeinrichtungen 35 angeordnet. Die Lastaufnahmeeinrichtungen 35 sind entlang den Reihen 29 der Längsriegelelemente 30 angeordnet.

Die Frachtbehälter 20 sind in Fig. 2 bezüglich der Symmetrieebene 50 in einer asymmetrischen Ladekonfiguration angeordnet. Alle in Fig. 2 gezeigten Frachtbehälter 20 weisen die gleichen Maße auf. Vorstellbar ist jedoch auch, dass im Wesentlichen in einer Hälfte 5, 7 Frachtbehälter 20 mit einer ersten Größe befestigt werden, während im Wesentlichen in der anderen Hälfte 5, 7 Frachtbehälter 20 mit einer zweiten Größe, die sich von der ersten Größe unterscheidet, befestigt werden. Auch ist es möglich in einem, beispielsweise vorderen, Teil des Frachtraumbodens 10 Frachtbehälter 20 einer ersten Größe zu befestigen, während in einem anderen, beispielsweise einem hinteren, Teil des Frachtraumbodens 10 Frachtbehälter 20 einer zweiten Größe, die sich von der ersten Größe unterscheidet, befestigt werden. Auch Ladekonfigurationen mit Frachtbehältern 20, die drei, vier oder noch mehr unterschiedliche Größen aufweisen, sind vorstellbar.

Im Hauptbereich des Flugzeugs 1, in dem der Flugzeugrumpf seine maximale Breite aufweist, ist die Ladekonfiguration wie folgt: In einer Hälfte 7 sind die Frachtbehälter 20 mit ihrer längsten Außenkante in Längsrichtung (x-Richtung) des Flugzeugs 1 ausgerichtet. Diese belegen jedoch nur einen Teil der einen Hälfte 7. Den restlichen Teil dieser ersten Hälfte 7 und die gesamte zweite Hälfte 5 wird von Frachtbehältern 20 belegt, die mit ihrer längsten Außenkante in Querrichtung (y-Richtung) des Flugzeugs 1 ausgerichtet sind. In den beiden gegenüberliegenden Endbereichen des Frachtraumbodens 10, in dem die Breite des Flugzeugsrumpfs gegenüber seiner maximalen Breite abnimmt, ist die Ladekonfiguration der Frachtbehälter 20 symmetrisch bezüglich der Symmetrieebene 50. In diesen Endbereichen des Frachtraumbodens 10 ist die Anordnung der Riegelspalten 25 bzw. Längsriegelelemente 30 symmetrisch bezüglich der Symmetrieebene 50. Vorstellbar ist jedoch auch, dass die Längsriegelelemente 30 auch in den Endbereichen des Flugzeugs 1 asymmetrisch angeordnet sind.

Der Abstand zwischen der Symmetrieebene 50 und den unmittelbar benachbarten Längsriegelelementen 30 zur Symmetrieebene 50 ist auch hier in beiden Hälften 5, 7 im Wesentlichen gleich groß. Vorstellbar ist jedoch auch hier, dass dieser Abstand in den beiden Hälften 5, 7 unterschiedlich groß ist.

Die Ladekonfiguration in Fig. 2 ist eine asymmetrische Beladung mit 32 Containern der Größe 88 inch (223,52 cm) * 125 inch (317,50 cm) * 82 inch (208,28 cm), die im Hauptbereich in der einen Hälfte 5 quer und in der anderen Hälfte 7 längs angeordnet sind. Die Riegelklauen der Seitenführungselemente 47 (in Fig. 2 nicht gezeigt) befinden sich jeweils an mittleren Positionen. Die Riegelklauen der Zentralführungselemente 40 sind jeweils an ihren äußersten Positionen in der zweiten Hälfte 7 festgesetzt. Die Ladekonfiguration in Fig. 2 ist im Hauptbereich des Decks zweizeilig, d.h. auf einer Höhe in Querrichtung (y-Richtung) des Flugzeugs 1 befinden sich genau zwei Frachtbehälter 20 nebeneinander.

Fig. 3 zeigt eine Aufsicht auf einen erfindungsgemäßen Frachtraumboden 10. Der Aufbau des Frachtraumbodens 10 der Fig. 3 ist identisch zu dem Aufbau des Frachtraumbodens 10 der Fig. 2. Die Frachtbehälter 20 sind in Fig. 3 in einer gegenüber der Symmetrieebene 50 symmetrischen Ladekonfiguration geladen. Die Ladekonfiguration ist jedoch gegenüber der Rumpfmittellinie 60 asymmetrisch, da der Frachtraumboden 10 gegenüber der Rumpfmittellinie 60 asymmetrisch in seiner geometrischen Form ist.

Auch in der Fig. 2 und in der Fig.3 gezeigten Ausführungsform umfasst der Frachtraumboden 10 Querriegel, die jedoch in Fig. 2 und Fig. 3 nicht gezeigt sind.

Die Ladekonfiguration in Fig. 3 ist eine symmetrische Beladungskonfiguration mit 15 Containern der Größe 96 inch (243,84 cm) * 196 inch (243,84 cm) * 118 inch (299,72 cm), 2 Containern der Größe 96 inch (243,84 cm) * 196 inch (243,84 cm) * 116 inch (294,64 cm) und einem AMA-Container. Diese Ladekonfiguration ist im Hauptbereich des Decks einzeilig, d.h. es befindet sich auf jeder Höhe in Querrichtung (y-Richtung) des Flugzeugs 1 genau ein Container.

Die Riegelklauen der Seitenführungselemente 47 befinden sich in Fig. 3 an den Positionen, an denen sie jeweils den zweitkleinsten Abstand in Querrichtung (y-Richtung) des Flugzeugs 1 zur Symmetrieebene 50 haben. Die Riegelklauen der Zentralführungselemente 40 befinden sich in ihrer abgeklappten Ruheposition.

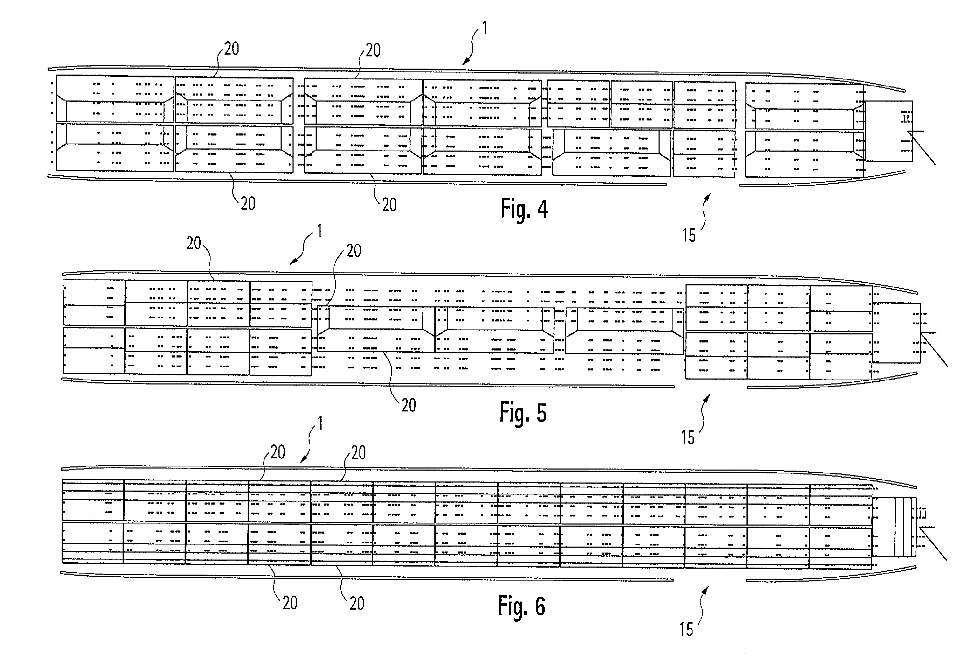

Fig. 4 zeigt eine Aufsicht auf den erfindungsgemäßen Frachtraumboden 10 gemäß Fig. 2 und Fig. 3. Die zweizeilige Ladekonfiguration in Fig. 4 ist eine asymmetrische Ladekonfiguration mit 4 Containern der Größe 96 inch (243,84 cm) * 238,5 inch * 116 inch (294,64 cm), 7 Containern der Größe 96 inch (243,84 cm) * 238,5 inch * 118 inch (299,72 cm), 4 AMX Containern der Größe 96 inch (243,84 cm) * 128 inch (325,12 cm) * 116 inch (294,64 cm) und einem AMA-Container. Die Riegelklauen der Seitenführungselemente 47 befinden sich in Fig. 4 an den Positionen, an denen sie jeweils den zweitkleinsten Abstand in Querrichtung (y-Richtung) des Flugzeugs 1 zur Symmetrieebene 50 haben. Die Riegelklauen der Zentralführungselemente 40 befinden sich jeweils an den Positionen, an den sie den geringsten Abstand zur Symmetrieebene 50 haben.

Fig. 5 zeigt eine Aufsicht auf den erfindungsgemäßen Frachtraumboden 10 gemäß den Fig. 2-4. Die teilweise einzeilige und teilweise zweizeilige Ladekonfiguration ist eine symmetrische Ladekonfiguration mit 3 Containern der Größe 96 inch (243,84 cm) * 238,5 inch * 118 inch (299,72 cm), 4 AML-Containern der Größe 96 inch (243,84 cm) * 125 inch (317,50 cm) * 116 inch (294,64 cm), 10 Containern der Größe 96 inch (243,84 cm) * 125 inch (317,50 cm) * 118 inch (299,72 cm) und einem AMA-Container. Die Riegelklauen der Seitenführungselemente 47 befinden sich in Fig. 5 in dem Bereich, in dem die Ladekonfigurationen zweizeilig ist, an den Positionen, an denen sie jeweils den zweitkleinsten Abstand in Querrichtung (y-Richtung) des Flugzeugs 1 zur Symmetrieebene 50 haben. In dem Bereich, in dem die Ladekonfigurationen einzeilig ist, werden die Seitenführungselemente 47 und die Zentralführungselemente 40 nicht benötigt. Die Riegelklauen der Zentralführungselemente 40 befinden sich in dem Bereich, in dem die Ladekonfiguration zweizeilig ist, jeweils an den Positionen, an den sie den geringsten Abstand zur Symmetrieebene 50 haben.

Fig. 6 zeigt eine Aufsicht auf einen erfindungsgemäßen Frachtraumboden 10 gemäß den Fig. 2-5. Die im Hauptbereich des Decks zweizeilige Ladekonfiguration ist eine symmetrische Ladekonfiguration mit 27 AAJ-Containern der Größe 88 inch (223,52 cm) * 125 inch (317,50 cm) * 96 inch (243,84 cm). Die Riegelklauen der Seitenführungselemente 47 befinden sich in Fig. 6 an den Positionen, an denen sie jeweils den kleinsten Abstand in Querrichtung (y-Richtung) des Flugzeugs 1 zur Symmetrieebene 50 haben. Die Riegelklauen der Zentralführungselemente 40 befinden sich jeweils an den Positionen, an den sie den geringsten Abstand zur Symmetrieebene 50 haben.

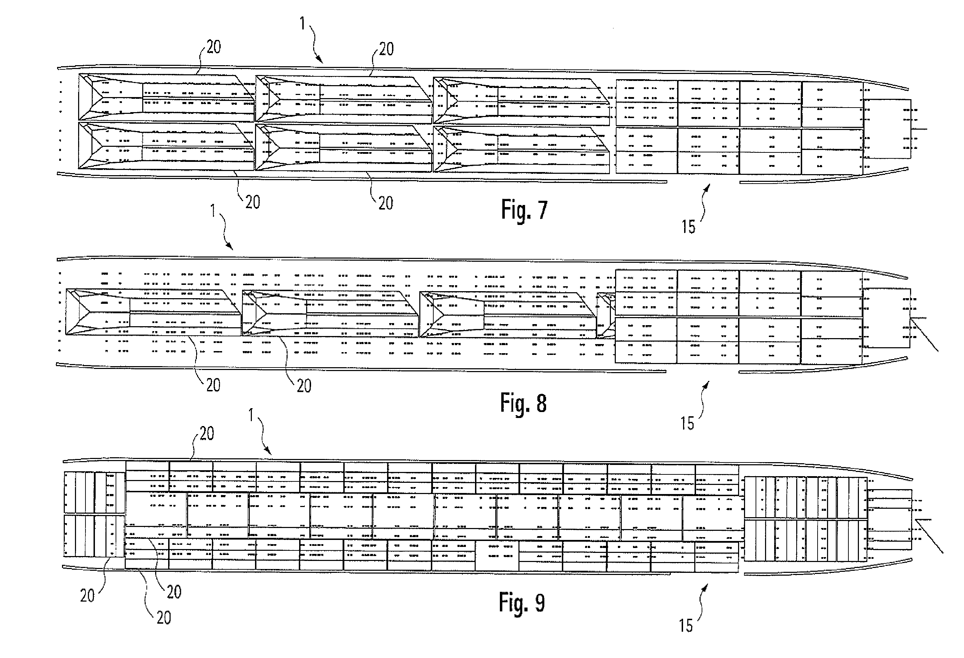

Fig. 7 zeigt eine Aufsicht auf einen erfindungsgemäßen Frachtraumboden 10 gemäß den Fig. 2-6. Die im Hauptbereich des Decks zweizeilige Ladekonfiguration ist eine asymmetrische Ladekonfiguration mit 7 Frachtgütern der Größe 360 inch (914,40 cm) * 96 inch (243,84 cm) * 118 inch (299,72 cm), 4 AMX-Containern, einem AML-Container und einem AMA-Container. Die Riegelklauen der Seitenführungselemente 47 befinden sich in Fig. 7 an den Positionen, an denen sie jeweils den zweitkleinsten Abstand in Querrichtung (y-Richtung) des Flugzeugs 1 zur Symmetrieebene 50 haben. Die Riegelklauen der Zentralführungselemente 40 befinden sich jeweils an den Positionen, an den sie den geringsten Abstand zur Symmetrieebene 50 haben.

Fig. 8 zeigt eine Aufsicht auf einen erfindungsgemäßen Frachtraumboden 10 gemäß den Fig. 2-7. Die im Hauptbereich des Decks teilweise einzeilige und teilweise zweizeilige Ladekonfiguration ist eine symmetrische Ladekonfiguration mit 4 Spezialpaletten der Größe 319 inch (810,26 cm) * 96 inch (243,84 cm) * 118 inch (299,72 cm), die Frachtgüter der maximalen Größe 360 inch (914,40 cm) * 96 inch (243,84 cm) * 118 inch (299,72 cm) beinhalten, und einer Kombination aus AMX-, AML- und AMA-Containern, die im Hauptbereich jeweils rechts und links neben den Spezialpaletten angeordnet sind. Die Seitenführungselemente 47 und die Zentralführungselemente 40 werden bei dieser Ladekonfiguration nicht benötigt. Die Riegelklauen der Zentralführungselemente 40 befinden sich in dem heruntergeklappten Ruhezustand.

Fig. 9 zeigt eine Aufsicht auf einen erfindungsgemäßen Frachtraumboden 10 gemäß den Fig. 2-8. Die im Hauptbereich des Decks dreizeilige Ladekonfiguration, d.h. drei Frachtbehälter befinden sich nebeneinander, ist eine symmetrische Ladekonfiguration mit 32 AYY-Containern der Größe 62 inch (157,48 cm) * 88 inch (223,52 cm) * 82 inch (208,28 cm) und 15 AMJ-Containern der Größe 96 inch (243,84 cm) * 125 inch (317,50 cm) * 96 inch (243,84 cm). Die Riegelklauen der Seitenführungselemente 47 befinden sich in Fig. 9 in dem Bereich, in dem die Ladekonfigurationen dreiteilig ist, an den Positionen, an denen sie jeweils den größten Abstand in Querrichtung (y-Richtung) des Flugzeugs 1 zur Symmetrieebene 50 haben. Im Bereich, in dem die Ladekonfigurationen zweizeilig sind, befinden sich Riegelklauen der Seitenführungselemente 47 an den Positionen, an denen sie jeweils den kleinsten Abstand in Querrichtung (y-Richtung) des Flugzeugs 1 zur Symmetrieebene 50 haben. Im Bereich, in dem die Ladekonfiguration dreizeilig ist, werden die Zentralführungselemente 40 nicht benötigt. Daher befinden sich deren Riegelklauen in der abgesenkten Ruheposition. Die Riegelklauen der Zentralführungselemente 40 befinden sich in dem Bereich, in dem die Ladekonfiguration zweizeilig ist, jeweils an den Positionen, an den sie den geringsten Abstand zur Symmetrieebene 50 haben.

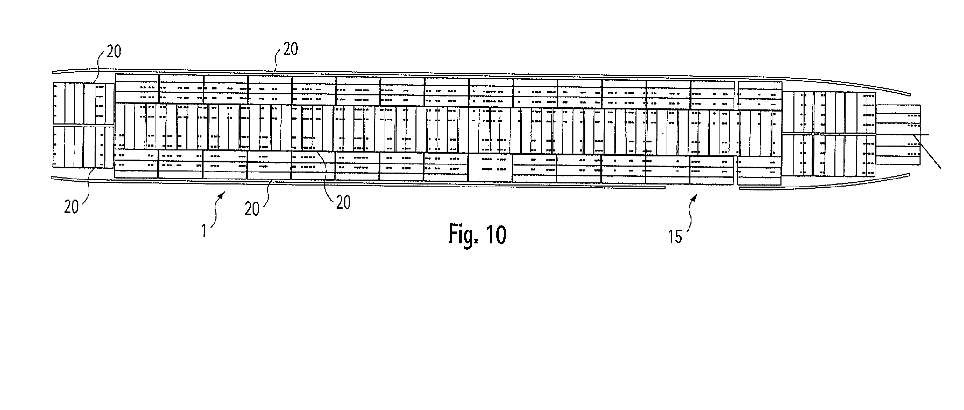

Fig. 10 zeigt eine Aufsicht auf einen erfindungsgemäßen Frachtraumboden 10 gemäß den Fig. 2-9. Die im Hauptbereich des Decks dreizeilige Ladekonfiguration ist eine symmetrische Ladekonfiguration mit 63 Containern der Größe 62 inch (157,48 cm) * 88 inch (223,52 cm) * 92 inch (233,68 cm). Im Bereich, in dem die Ladekonfigurationen dreizeilig ist, befinden sich Riegelklauen der Seitenführungselemente 47 an den Positionen, an denen sie jeweils den zweitgrößten Abstand in Querrichtung (y-Richtung) des Flugzeugs 1 zur Symmetrieebene 50 haben.

Im Bereich, in dem die Ladekonfiguration zweizeilig ist, befinden sich Riegelklauen der Seitenführungselemente 47 an den Positionen, an denen sie jeweils den kleinsten Abstand in Querrichtung (y-Richtung) des Flugzeugs 1 zur Symmetrieebene 50 haben. Die Riegelklauen der Zentralführungselemente 40 befinden sich in dem Bereich, in dem die Ladekonfiguration dreizeilig ist, in ihrer abgesenkten Ruheposition. Die Riegelklauen der Zentralführungselemente 40 befinden sich in dem Bereich, in dem die Ladekonfiguration zweizeilig ist, jeweils an den Positionen, an den sie den geringsten Abstand zur Symmetrieebene 50 haben.

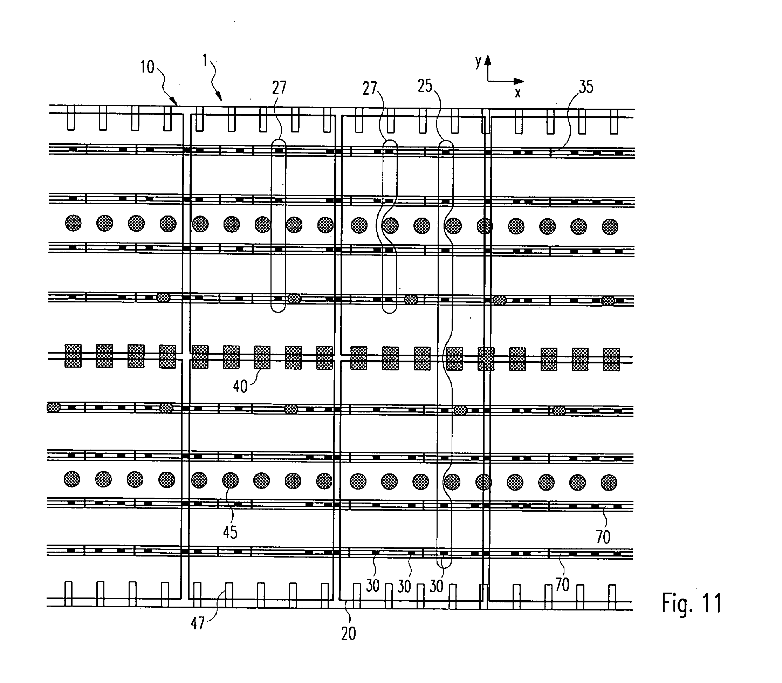

Fig. 11 zeigt eine Aufsicht auf einen Ausschnitt eines weiteren erfindungsgemäßen Frachtraumbodens 10. Die Anordnung der Riegelspalten 25, 27 bzw. Längsriegelelemente 30 ist in der in Fig. 11 gezeigten Ausführungsform unterschiedlich gegenüber den in den Fig. 1-10 gezeigten Ausführungsformen. Der Frachtraumboden 10 der in Fig. 11 gezeigten Ausführungsform umfasst eine Vielzahl von symmetrischen und asymmetrischen Riegelspalten 25, 27.

Die Längsriegelelemente 30 in den jeweiligen Hälften 5, 7 sind jeweils in Verankerungsschienen 70 angeordnet, die im Wesentlichen parallel zur Längsachse des Flugzeugs 1 verlaufen. In jeder Hälfte 5, 7 sind vier parallel zueinander verlaufende Verankerungsschienen 70 angeordnet. Der Abstand der unmittelbar zur Symmetrieebene 50 benachbarten Verankerungsschiene 70 ist in beiden Hälften 5, 7 jeweils gleich groß. Vorstellbar ist auch, dass die Abstände in den beiden Hälften 5, 7 unterschiedlich groß sind.

Die Abstände der Verankerungsschiene 70 zueinander sind in den beiden Hälften 5, 7 gleich groß. Vorstellbar ist jedoch auch, dass die Abstände zueinander in den jeweiligen Hälften 5, 7 oder in nur einer Hälfte 5, 7 unterschiedlich groß sind.

Die Längsriegelelemente 30, die in den Verankerungsschienen 70 angeordnet sind, sind asymmetrisch bezüglich der Symmetrieebene 50 angeordnet. Neben den Längsriegelelementen 30 sind in Fig. 11 auch Querriegelelemente 40, 45, 47 zu sehen. Nahe der Symmetrieebene 50, d.h. in einem Abstand in Querrichtung (y-Richtung) des Flugzeugs 1 von weniger als ca. 30 cm, befinden sich Querriegelelemente 40 als Zentralführungselemente zum Sichern der Frachtbehälter 20 in Querrichtung (y-Richtung) des Flugzeugs 1. Die Zentralführungselemente 40 umfassen so genannte Center-Latches, die jeweils zwei Riegelklauen beinhalten. Die Riegelklauen der Center-Latches sind unabhängig voneinander entlang der Querrichtung (y-Richtung) des Flugzeugs 1 verschiebbar und an verschiedenen Positionen der Querrichtung festsetzbar. Die Center-Latches 40 befinden sich im Wesentlichen auf gleicher Höhe bezüglich der Querrichtung (y-Richtung) des Flugzeugs. Die Center-Latches 40 sind alle in einer Reihe im Wesentlichen parallel zur Symmetrieebene 50 auf dem Frachtraumboden 10 angeordnet. Es ist jedoch auch vorstellbar, dass einzelne oder mehrere Center-Latches 40 sich auf unterschiedlichen Höhen bezüglich der Querrichtung (y-Richtung) des Flugzeugs 1 befinden. Die Center-Latches 40 können insbesondere derartige Center-Latches sein, wie diese in der internationalen Patentanmeldung, die am 22. Juni 2009 unter dem Aktenzeichen PCT/EP2009/004484 bei dem Europäischen Patentamt eingereicht wurde, beschrieben sind.

Neben diesen Querriegelelementen 40 als Zentralführungselementen sind weitere Querriegelelemente 47 als Seitenführungselemente an den beiden gegenüberliegenden seitlichen Außenrändern des Frachtraumbodens 10 angeordnet. Die Seitenführungselemente 47 umfassen jeweils eine Riegelklaue, die entlang der Querrichtung (y-Richtung) des Flugzeugs 1 verschiebbar und an verschiedenen Positionen entlang der Querrichtung (y-Richtung) des Flugzeugs 1 festsetzbar ist. Hierdurch kann der Frachtraumboden 10 auf Frachtbehälter 20 mit unterschiedlichen Ausdehnungen in Querrichtung (y-Richtung) des Flugzeugs angepasst werden. Die Anzahl möglicher Ladekonfigurationen wird hierdurch erhöht.

Die Seitenführungselemente 47 können jeweils mindestens eine Seitenführungsvorrichtung mit einem Schlitten aufweisen, wobei die Seitenführungsvorrichtung in Querrichtung (y-Richtung) des Flugzeugs 1 verschiebbar in dem Befestigungsrahmen gelagert ist. Der Befestigungsrahmen, der im Wesentlichen U-förmig ausgebildet ist und die Seitenschienen aufweist, die integral mit einem Befestigungssockel verbunden sind, ermöglicht es also, dass die Seitenführungsvorrichtungen innerhalb diesem in Querrichtung (y-Richtung) des Flugzeugs 1 verschoben werden. Die Verschiebbarkeit der Seitenführungsvorrichtungen wird durch einen ersten Schlitten bzw. durch einen zweiten Schlitten gewährleistet, wobei diese Schlitten gleitbeweglich in hierfür vorgesehenen Führungen der Seitenschienen gelagert sind. Zum Festsetzen der Seitenführungsvorrichtung in den verschiedenen Positionen greifen hierfür vorgesehene Achsenstummel, die einen Teil einer Festsetzvorrichtung bilden, in die an den entsprechenden Positionen vorgesehen Bohrungen wechselseitig ein. Es ist bei einem Seitenführungselement 47, bei dem zwei Seitenführungsvorrichtungen in dem Befestigungsrahmen angeordnet sind, möglich, sowohl die eine als auch die andere Seitenführungsvorrichtung aus dem Befestigungsrahmen herauszunehmen, indem diese an den offenen Enden des Befestigungsrahmens herausgefahren werden. Insofern ergeben sich hieraus zahlreiche Ladekonfigurationsmöglichkeiten.

Zwischen den Seitenführungselementen 47 und den Zentralführungselementen 40 sind weitere Querriegelelemente 45 zum Sichern der Frachtbehälter 20 in Querrichtung (y-Richtung) des Flugzeugs 1 ungefähr im gleichen Abstand zu den Zentralführungselementen 40 und den Seitenführungselementen 47 in Querrichtung (y-Richtung) des Flugzeugs 1 angeordnet. Diese weiteren Querriegelelemente 45 umfassen jeweils zwei Riegelklauen, die in entgegen gesetzte Richtungen entlang der Querrichtung (y-Richtung) des Flugzeugs 1 zeigen. Diese weiteren Querriegelelemente 45 können ebenfalls entlang der Querrichtung (y-Richtung) des Flugzeugs 1 verschiebbar und an verschiedenen Positionen entlang der Querrichtung (y-Richtung) des Flugzeugs 1 festsetzbar sein. Vorstellbar ist auch, dass in Querrichtung (y-Richtung) des Flugzeugs 1 zwischen den Zentralführungselementen 40 und den weiteren Querriegelelementen 45 noch weitere zusätzliche Querriegelelemente angeordnet sind.

Die Querriegelelemente 40, 45, 47 sind zumindest teilweise aus einer Arbeitsposition, in der sie einen oder mehrere Frachtbehälter 20 sichern, in eine Ruheposition, in der sie von Frachtbehältern 20 überfahren werden können, abklappbar. So müssen die Querriegelelemente 40, 45, 47 nicht ausgebaut werden, wenn sie nicht benötigt werden. Auf diese Weise werden ein-, zwei- oder dreizeilige Ladekonfiguration ermöglicht. Auch vierzeilige Ladekonfigurationen oder Ladekonfigurationen mit mehr als vier Zeilen sind vorstellbar.

Die Längsriegelelemente 30 sind an solchen Positionen entlang der Längsrichtung (x-Richtung) des Flugzeugs 1 angeordnet, an denen sich auf gleicher Höhe in Längsrichtung (x-Richtung) des Flugzeugs 1 keine Querriegelelemente 40, 45, 47 zum Sichern der Frachtbehälter 20 in Querrichtung (y-Richtung) des Flugzeugs 1 befinden.

Durch die zumindest teilweise Verschiebbarkeit der Querriegelelemente 40, 47 kann der Frachtraumboden 10 nicht nur auf unterschiedliche Ausdehnungen der Frachtbehälter 20 in Längsrichtung (x-Richtung) des Flugzeugs 1 angepasst werden, sondern auch auf Frachtbehälter 20 mit unterschiedlichen Ausdehnungen in Querrichtung (y-Richtung) des Flugzeugs 1. Hierdurch erhöht sich die Anpassungsfähigkeit des Frachtraumbodens 10 an verschiedene Arten von Frachtbehältern 20 bzw. die Anzahl möglicher Ladekonfigurationen.

Zwischen den Längsriegelelementen 30 sind teilweise Lastaufnahmeeinrichtungen 35 in den Verankerungsschienen 70 angeordnet.

Die möglichen Abstände in Querrichtung (y-Richtung) des Flugzeugs 1 zwischen den verschiedenen Festsetzpositionen der Seitenführungselemente 47 und der Symmetrieebene 50 betragen ungefähr 90,3 inch (229,362 cm), 98,3 inch (249,682 cm) und 108,0 inch (274,32 cm). Der Abstand zwischen den äußeren Festsetzpositionen der weiteren Querriegelelemente 45 in Querrichtung (y-Richtung) des Flugzeugs beträgt ungefähr 96,4 inch (244,856 cm). Der minimale Abstand zwischen den Riegelklauen der weiteren Querriegelelemente 45 und der Symmetrieebene beträgt ungefähr 44 inch (111,76 cm).

Beispielsweise sind mit einem erfindungsgemäßen Frachtraumboden 10 folgende Ladekonfigurationen bzw. ein Teil hiervon möglich:
- symmetrische Beladung mit 27 Containern (AMX-, AML- und AMA-Container gemischt);
- asymmetrische Beladung mit 30 Containern der Größe 96 inch (243,84 cm) * 125 inch (317,50 cm) * 116 inch (294,64 cm), die im Hauptbereich in der einen Hälfte quer und in der anderen Hälfte längs angeordnet sind;
- symmetrische Beladung mit 26 Containern der Größe 96 inch (243,84 cm) * 125 inch (317,50 cm) * 116 inch (294,64 cm) und einem AMA-Container;
- asymmetrische Beladung mit 29 Containern der Größe 96 inch (243,84 cm) * 125 inch (317,50 cm) * 116 inch (294,64 cm) und einem AMA-Container;
- asymmetrische Beladung mit 32 Containern der Größe 88 inch (223,52 cm) * 125 inch (317,50 cm) * 116 inch (294,64 cm)
- asymmetrische Beladung mit 14 Containern der Größe 96 inch (243,84 cm) * 125 inch (317,50 cm) * 116 inch (294,64 cm) und 16 Containern der Größe 88 inch (223,52 cm) * 125 inch (317,50 cm) * 116 inch (294,64 cm);
- asymmetrische Beladung mit 4 Containern der Größe 96 inch (243,84 cm) * 238,5 inch * 116 inch (294,64 cm), 7 Containern der Größe 96 inch (243,84 cm) * 238,5 inch * 118 inch (299,72 cm), 4 AMX Containern der Größe 96 inch (243,84 cm) * 128 inch (325,12 cm) * 116 inch (294,64 cm) und einem AMA-Container;
- symmetrische Beladung mit 3 Containern der Größe 96 inch (243,84 cm) * 238,5 inch * 118 inch (299,72 cm), 4 AML-Containern der Größe 96 inch (243,84 cm) * 125 inch (317,50 cm) * 116 inch (294,64 cm), 10 Containern der Größe 96 inch (243,84 cm) * 125 inch (317,50 cm) * 118 inch (299,72 cm) und einem AMA-Container;
- symmetrische Beladung mit 15 Containern der Größe 96 inch (243,84 cm) * 196 inch (243,84 cm) * 118 inch (299,72 cm), 2 Containern der Größe 96 inch (243,84 cm) * 196 inch (243,84 cm) * 116 inch (294,64 cm) und einem AMA-Container;
- asymmetrische Beladung mit 32 Containern der Größe 88 inch (223,52 cm) * 125 inch (317,50 cm) * 82 inch (208,28 cm), die im Hauptbereich in der einen Hälfte quer und in der anderen Hälfte längs angeordnet sind
- symmetrische Beladung mit 27 AAJ-Containern der Größe 88 inch (223,52 cm) * 125 inch (317,50 cm) * 96 inch (243,84 cm);
- asymmetrische Beladung mit 7 Frachtgütern der Größe 360 inch (914,40 cm) * 96 inch (243,84 cm) * 118 inch (299,72 cm), 4 AMX-Containern, einem AML-Container und einem AMA-Container;
- symmetrische Beladung mit 4 Spezialpaletten der Größe 319 inch (810,26 cm) * 96 inch (243,84 cm) * 118 inch (299,72 cm), die Frachtgüter der maximalen Größe 360 inch (914,40 cm) * 96 inch (243,84 cm) * 118 inch (299,72 cm) beinhalten, und einer Kombination aus AMX-, AML- und AMA-Containern, die im Hauptbereich jeweils rechts und links neben den Spezialpaletten angeordnet sind;
- symmetrische Beladung mit 32 AYY-Containern der Größe 62 inch (157,48 cm) * 88 inch (223,52 cm) * 82 inch (208,28 cm) und 15 AMJ-Containern der Größe 96 inch (243,84 cm) * 125 inch (317,50 cm) * 96 inch (243,84 cm); und/oder
- symmetrische Beladung mit 63 Containern der Größe 62 inch (157,48 cm) * 88 inch (223,52 cm) * 92 inch (233,68 cm).

Andere Ladekonfigurationen mit Containern 20 mit anderen Maßen sind vorstellbar.

Die Riegelspalten 25, 27, die Längsriegelelemente 30 in beiden Hälften 5, 7 aufweisen, können jeweils mindestens vier, insbesondere acht Längsriegelelemente 30 umfassen. Hierdurch wird eine noch bessere Verteilung der auftretenden Kräfte erreicht.

In einer Hälfte 5, 7 kann eine größere Anzahl von Riegelelementen 30 angeordnet als in der anderen Hälfte 5, 7. Vorteilhaft hieran ist, dass in einer Hälfte 5, 7 die Anzahl der Ladekonfigurationen für die Frachtbehälter 20 weiter erhöht wird, ohne das Gewicht des Frachtraumbodens 10 unnötig zu erhöhen, indem auf der anderen Hälfte 5, 7 die gleiche Anzahl weiterer Riegelelemente 30 angeordnet ist.

Zumindest teilweise können zwischen den Riegelspalten 25, 27 entlang der Längsrichtung (x-Richtung) des Flugzeugs 1 Lastaufnahmeeinrichtungen 35, insbesondere Rollen, Kugelrollen oder Nachlaufrollen, angeordnet sind. Vorteilhaft hieran ist, dass die Bewegung der Frachtbehälter 20 bei Beladung und Entladung des Flugzeugs 1 deutlich erleichtert wird. Zudem wird die genaue Positionierung der Frachtbehälter 20 an ihren Verriegelungspositionen erleichtert.

Zwischen den Zentralführungselementen 40 und den Seitenführungselementen 47 können weitere Querriegelelemente 45 zum Sichern der Frachtbehälter 20 in Querrichtung (y-Richtung) des Flugzeugs 1 angeordnet sein. Hierdurch wird die Anzahl der möglichen Ladekonfigurationen für die Frachtbehälter 20 noch weiter erhöht.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichen:

- 1: Flugzeug
- 5: erste Hälfte
- 7: zweite Hälfte
- 10: Frachtraumboden
- 15: Frachtraumtür
- 20: Frachtbehälter
- 25: symmetrische Riegelspalte (mit Riegelelementen in beiden Hälften)
- 27: asymmetrische Riegelspalte (mit allen Riegelelementen in nur einer Hälfte)
- 29: Reihe von Riegelelementen
- 30: Längsriegelelemente
- 35: Lastaufnahmeeinrichtungen
- 40: Zentralführungselemente
- 45: weitere Querriegelelemente zur Sicherung in y-Richtung
- 47: Seitenführungselemente
- 50: Symmetrieebene des Decks bzw. des Frachtraumbodens
- 60: Rumpfmittellinie
- 70: Verankerungsschienen

## Patentansprüche

1. Frachtraumboden (10) eines oberen und/oder eines unteren Decks eines Flugzeugs (1) mit einer Symmetrieebene (50), die den Frachtraumboden (10) in eine erste Hälfte (5) und eine zweite Hälfte (7) teilt, umfassend Riegelspalten (25, 27), die jeweils alle auf einer Höhe in Längsrichtung (x-Richtung) des Flugzeugs (1) befindlichen Riegelelemente (30), insbesondere Längsriegelelemente, zum Sichern von genormten Frachtbehältern (20), insbesondere von Paletten und/oder Containern, in Längsrichtung (x-Richtung) des Flugzeugs (1) umfassen, wobei alle Längsriegelelemente (30) mindestens einer Riegelspalte (27) in nur einer der Hälften (5, 7) angeordnet sind.

2. Frachtraumboden (10) nach Anspruch 1, wobei Riegelklauen der Längsriegelelemente (30) einer Riegelspalte (25, 27) derart angeordnet sind, dass die Riegelklauen eine Anschlaglinie für eine Seite eines Frachtbehälters (20) bilden.

3. Frachtraumboden (10) nach einem der vorhergehenden Ansprüche, wobei mindestens eine Riegelspalte (25, 27) mindestens zwei, insbesondere mindestens vier, Längsriegelelemente (30) in einer Hälfte (5, 7) umfasst.

4. Frachtraumboden (10) nach einem der vorhergehenden Ansprüche, wobei der Frachtraumboden (10) sowohl symmetrische Riegelspalten (27), die Längsriegelelemente (30) in beiden Hälften (5, 7) aufweisen, als auch asymmetrische Riegelspalten (25), die Längsriegelelemente (30) in nur einer Hälfte (5, 7) aufweisen, umfasst.

5. Frachtraumboden (10) nach einem der vorhergehenden Ansprüche, wobei die Abstände mindestens einer Riegelspalte (25, 27) zu ihren zwei unmittelbar benachbarten Riegelspalten (25, 27) unterschiedlich groß sind.

6. Frachtraumboden (10) nach einem der vorhergehenden Ansprüche, wobei die Riegelspalten (25, 27) an solchen Positionen in Längsrichtung (x-Richtung) des Flugzeugs (1) angeordnet sind, an denen sich auf gleicher Höhe in Längsrichtung (x-Richtung) des Flugzeugs (1) keine korrespondierenden Querriegelelemente (40, 45, 47) zum Sichern der Frachtbehälter (20) in Querrichtung (y-Richtung) des Flugzeugs (1) angeordnet sind.

7. Frachtraumboden (10) nach einem der vorhergehenden Ansprüche, wobei die Riegelspalten (25, 27) zur Aufnahme von standardisierten Frachtbehältern (20) angeordnet sind, die insbesondere Standardlängen und/oder Standardbreiten von ca. 62 inch (157,48 cm), ca. 88 inch (223,52 cm), ca. 96 inch (243,84 cm), ca. 125 inch (317,50 cm), ca. 238,5 inch (605,79 cm) und/oder ca. 319 inch (810,26 cm) haben.

8. Frachtraumboden (10) nach einem der vorhergehenden Ansprüche, insbesondere nach Anspruch 7, wobei der Abstand mindestens eines Paars asymmetrischer Riegelspalten (27) in Längsrichtung (x-Richtung) des Flugzeugs (1) einer Standardlänge und/oder Standardbreite von Frachtbehältern (20) entspricht.

9. Frachtraumboden (10) nach einem der vorhergehenden Ansprüche, wobei der Frachtraumboden (10) Verankerungsschienen (70), insbesondere mindestens zwei pro Hälfte, vorzugsweise mindestens vier pro Hälfte, in Längsrichtung (x-Richtung) des Flugzeugs (1) zur Aufnahme der Längsriegelelemente (30) umfasst, wobei die Verankerungsschienen (70) vorzugsweise Teil von Rollenbahnen sind.

10. Frachtraumboden (10) nach einem der vorhergehenden Ansprüche, insbesondere nach Anspruch 9, wobei die Abstände der Verankerungsschienen (70) zueinander in den jeweiligen Hälften (5, 7) zumindest abschnittsweise gleich groß sind.

11. Frachtraumboden (10) nach einem der vorhergehenden Ansprüche, wobei mindestens eine Riegelspalte (25, 27) Längsriegelelemente (30) mit zwei in entgegen gesetzten Richtungen entlang der Längsrichtung (x-Richtung) des Flugzeugs (1) gerichteten Riegelklauen aufweist.

12. Frachtraumboden (10) nach einem der vorhergehenden Ansprüche, wobei am äußeren Rand des Frachtraumbodens (10) Querriegelelemente (40) als Seitenführungselemente angeordnet sind, die an verschiedenen Positionen entlang der Querrichtung (y-Richtung) des Flugzeugs (1) festsetzbar sind.

13. Frachtraumboden (10) nach einem der vorhergehenden Ansprüche, wobei nahe zur Symmetrieebene Querriegelelemente (40), insbesondere mit mindestens zwei Riegelklauen, als Zentralführungselemente angeordnet sind, die an verschiedenen Positionen entlang der Querrichtung (y-Richtung) des Flugzeugs festsetzbar sind.

14. Frachtraumboden (10) nach einem der vorhergehenden Ansprüche, insbesondere nach Anspruch 12 oder 13, wobei Riegelklauen der Querriegelelemente (40) zumindest teilweise unabhängig voneinander verschiebbar und/oder zumindest teilweise in eine abgesenkte Position umklappbar sind.

15. Flugzeug (1) mit einem Frachtraumboden (10) nach einem der vorhergehenden Ansprüche.

## Claims

1. Cargo hold floor (10) of an upper and/or lower deck of an aircraft (1) having a plane of symmetry (50) which divides the cargo hold floor (10) into a first half (5) and a second half (7), comprising locking slots (25, 27) which each include locking elements (30), especially longitudinal locking elements, all located at one height in the longitudinal direction (x-direction) of the aircraft (1), for securing standard cargo containers (20), especially pallets and/or containers, in the longitudinal direction (x-direction) of the aircraft (1), wherein all the longitudinal locking elements (30) of at least one locking slot (27) are arranged in only one of the halves (5, 7).

2. Cargo hold floor (10) according to claim 1, wherein
locking jaws of the longitudinal locking elements (30) of a locking slot (25, 27) are arranged in such a way that the locking jaws form a stop line for a side of a cargo container (20).

3. Cargo hold floor (10) according to either one of the preceding claims, wherein at least one locking slot (25, 27) comprises at least two, especially at least four, longitudinal locking elements (30) in one half (5, 7).

4. Cargo hold floor (10) according to any one of the preceding claims, wherein the cargo hold floor (10) comprises both symmetrical locking slots (27), which have longitudinal locking elements (30) in both halves (5, 7), and asymmetrical locking slots (25), which have longitudinal locking elements (30) in only one half (5, 7).

5. Cargo hold floor (10) according to any one of the preceding claims, wherein the spacings of at least one locking slot (25, 27) from its two immediately adjacent locking slots (25, 27) are different.

6. Cargo hold floor (10) according to any one of the preceding claims, wherein the locking slots (25, 27) are arranged at those positions in the longitudinal direction (x-direction) of the aircraft (1) at which no complementary transverse locking elements (40, 45, 47) for securing the cargo containers (20) in the transverse direction (y-direction) of the aircraft (1) are arranged at the same height in the longitudinal direction (x-direction) of the aircraft (1).

7. Cargo hold floor (10) according to any one of the preceding claims, wherein the locking slots (25, 27) are arranged for receiving standard cargo containers (20) which especially have standard lengths and/or standard widths of approximately 62 inches (157.48 cm), approximately 88 inches (223.52 cm), approximately 96 inches (243.84 cm), approximately 125 inches (317.50 cm), approximately 238.5 inches (605.79 cm) and/or approximately 319 inches (810.26 cm).

8. Cargo hold floor (10) according to any one of the preceding claims, especially according to claim 7, wherein
the spacing between at least one pair of asymmetrical locking slots (27) in the longitudinal direction (x-direction) of the aircraft (1) corresponds to a standard length and/or a standard width of cargo containers (20).

9. Cargo hold floor (10) according to any one of the preceding claims, wherein the cargo hold floor (10) comprises anchoring rails (70), especially at least two per half, preferably at least four per half, in the longitudinal direction (x-direction) of the aircraft (1) for receiving the longitudinal locking elements (30), wherein the anchoring rails (70) are preferably part of roller conveyors.

10. Cargo hold floor (10) according to any one of the preceding claims, especially according to claim 9, wherein
the spacings of the anchoring rails (70) from one another are, at least in some regions, the same in the respective halves (5, 7).

11. Cargo hold floor (10) according to any one of the preceding claims, wherein at least one locking slot (25, 27) has longitudinal locking elements (30) having two locking jaws directed in opposite directions along the longitudinal direction (x-direction) of the aircraft (1).

12. Cargo hold floor (10) according to any one of the preceding claims, wherein at the outer edge of the cargo hold floor (10) there are arranged transverse locking elements (40) as lateral guide elements which can be fixed in various positions along the transverse direction (y-direction) of the aircraft (1).

13. Cargo hold floor (10) according to any one of the preceding claims, wherein close to the plane of symmetry there are arranged transverse locking elements (40), especially having at least two locking jaws, as central guide elements which can be fixed in various positions along the transverse direction (y-direction) of the aircraft.

14. Cargo hold floor (10) according to any one of the preceding claims, especially according to claim 12 or 13, wherein locking jaws of the transverse locking elements (40) are at least partly displaceable independently of one another and/or at least partly foldable into a lowered position.

15. Aircraft (1) having a cargo hold floor (10) according to any one of the preceding claims.

## Revendications

1. Plancher de soute (10) d'un pont supérieur et/ou d'un pont inférieur d'un avion (1) présentant un plan de symétrie (50), qui divise le plancher de soute (10) en une première moitié (5) et une deuxième moitié (7), comportant des fentes de verrouillage (25, 27), qui comprennent respectivement tous les éléments de verrouillage (30) se trouvant à une hauteur en direction longitudinale (direction x) de l'avion (1), en particulier des éléments de verrouillage longitudinaux, pour immobiliser des récipients de soute normalisés (20), en particulier des palettes et/ou des conteneurs, en direction longitudinale (direction x) de l'avion (1), tous les éléments de verrouillage longitudinaux (30) d'au moins une fente de verrouillage (27) étant disposés uniquement dans une moitié (5, 7).

2. Plancher de soute (10) selon la revendication 1, dans lequel des griffes de verrouillage des éléments de verrouillage longitudinaux (30) d'une fente de verrouillage (25, 27) sont disposées d'une manière telle que les griffes de verrouillage forment une ligne de butée pour un côté d'un récipient de soute (20).

3. Plancher de soute (10) selon l'une quelconque des revendications précédentes, dans lequel au moins une fente de verrouillage (25, 27) comprend au moins deux, en particulier au moins quatre, éléments de verrouillage longitudinaux (30) dans une moitié (5, 7).

4. Plancher de soute (10) selon l'une quelconque des revendications précédentes, dans lequel le plancher de soute (10) comprend aussi bien des fentes de verrouillage symétriques (27), qui présentent des éléments de verrouillage longitudinaux (30) dans les deux moitiés (5, 7), que des fentes de verrouillage asymétriques (25), qui présentent des éléments de verrouillage longitudinaux (30) uniquement dans une moitié (5, 7).

5. Plancher de soute (10) selon l'une quelconque des revendications précédentes, dans lequel les distances d'au moins une fente de verrouillage (25, 27) à ses deux fentes de verrouillage immédiatement voisines (25, 27) sont de grandeurs différentes.

6. Plancher de soute (10) selon l'une quelconque des revendications précédentes, dans lequel les fentes de verrouillage (25, 27) sont disposées à des positions en direction longitudinale (direction x) de l'avion (1) dans lesquelles aucun élément de verrouillage transversal correspondant (40, 45, 47) n'est disposé à la même hauteur en direction longitudinale (direction x) de l'avion (1), pour immobiliser les récipients de soute (20) dans la direction transversale (direction y) de l'avion (1).

7. Plancher de soute (10) selon l'une quelconque des revendications précédentes, dans lequel les fentes de verrouillage (25, 27) sont disposées de façon à recevoir des récipients de soute normalisés (20), qui ont en particulier des longueurs normalisées et/ou des largeurs normalisées d'environ 62 pouces (157,48 cm), environ 88 pouces (223,52 cm), environ 96 pouces (243,84 cm), environ 125 pouces (317,50 cm), environ 238,5 pouces (605,79 cm) et/ou environ 319 pouces (810,26 cm).

8. Plancher de soute (10) selon l'une quelconque des revendications précédentes, en particulier selon la revendication 7, dans lequel la distance d'au moins une paire de fentes de verrouillage asymétriques (27) en direction longitudinale (direction x) de l'avion (1) correspond à une longueur normalisée et/ou à une largeur normalisée de récipients de soute (20).

9. Plancher de soute (10) selon l'une quelconque des revendications précédentes, dans lequel le plancher de soute (10) comprend des rails d'ancrage (70), en particulier au moins deux par moitié, de préférence au moins quatre par moitié, en direction longitudinale (direction x) de l'avion (1) en vue de recevoir les éléments de verrouillage longitudinaux (30), les rails d'ancrage (70) faisant de préférence partie de transporteurs à rouleaux.

10. Plancher de soute (10) selon l'une quelconque des revendications précédentes, en particulier selon la revendication 9, dans lequel les distances des rails d'ancrage (70) l'un par rapport à l'autre dans les moitiés respectives (5, 7) sont au moins localement de même grandeur.

11. Plancher de soute (10) selon l'une quelconque des revendications précédentes, dans lequel au moins une fente de verrouillage (25, 27) présente des éléments de verrouillage longitudinaux (30) avec deux griffes de verrouillage orientées dans des directions opposées le long de la direction longitudinale (direction x) de l'avion (1).

12. Plancher de soute (10) selon l'une quelconque des revendications précédentes, dans lequel il se trouve sur le bord extérieur du plancher de soute (10) des éléments de verrouillage transversaux (40) sous forme d'éléments de guidage latéral, qui peuvent être calés dans différentes positions le long de la direction transversale (direction y) de l'avion (1).

13. Plancher de soute (10) selon l'une quelconque des revendications précédentes, dans lequel il se trouve à proximité du plan de symétrie des éléments de verrouillage transversaux (40), en particulier avec au moins deux griffes de verrouillage, sous forme d'éléments de guidage centraux, qui peuvent être calés dans différentes positions le long de la direction transversale (direction y) de avion.

14. Plancher de soute (10) selon l'une quelconque des revendications précédentes, en particulier selon la revendication 12 ou 13, dans lequel des griffes de verrouillage des éléments de verrouillage transversaux (40) sont déplaçables au moins en partie indépendamment l'une de l'autre et/ou sont rabattables au moins en partie dans une position abaissée.

15. Avion (1) avec un plancher de soute (10) selon l'une quelconque des revendications précédentes.
